# EUROPEAN PATENT APPLICATION

(11) **EP 2 487 949 A1**
(43) Date of publication of application: **15.08.2012**
(21) Application number: 11290086.5
(22) Date of filing: 14.02.2011
(51) Int. Cl.: H04W 16/20

(54) **Wireless network micro-cell base-station and method to control quality of signal**

(71) Applicant: Alcatel Lucent, 75007 Paris (FR)
(72) Inventor: Haratcherev, Ivaylo, 91620 Nozay (FR); Conte, Alberto, 91620 Nozay (FR)
(74) Representative: Croonenbroek, Thomas Jakob

(57) **Abstract**

The invention provides a method to control quality of signal in a network micro-cell, comprising the steps :
-the base station (1) receives a measure of the interfering signals in the current deployment position (A) for the used carrier frequency domain,
-the base station (1) determines a quality of signal indicator value taking into account the measured interfering signals in the current deployment position (A) for the used carrier frequency domain,
-the base stations (1) sends the determined quality of signal indicator value to a display interface (7).

The invention also relates to the associated wireless network microcell base-station.

## Description

### BACKGROUND OF THE INVENTION

The present invention relates to the domain of telecommunications, more particularly to the domain of wireless networks.

The wireless networks used for private, more specifically domestic use comprise generally a base station, granting a wireless connection in a space referred to as micro-cell, pico-cell or femto-cell. Within this micro-cell, the base station emits a radio wave signal and collects the responses of user equipments such as phones, computers, laptops, electronic pads etc...

This micro-cell generally covers a building or a floor or apartment, for example the home of the user, or a building such as a hotel, a bar or a restaurant. These micro-cells contribute to an effective backhauling architecture in the network. This allows the providers to reduce the charges on user side (flat rates offers), while providing a good connectivity.

However, with the large spreading of such micro-cell base stations, a problem arises in densely populated areas, such as urban regions, where the neighbouring base stations interfere with each-other, leading to a signal degradation.

It is known to use self configuration or self calibration algorithms in a base station to selectively adapt the used bandwidth portion in order to minimize interference from the external signals. However, the different base stations, potentially belonging to different providers, operate such algorithms independently one from another. Consequently these algorithms often need to be iterated and can potentially leave unused bandwidth domains between the used ones. Also, the settings used as best available can often still be improved.

### SUMMARY OF THE INVENTION

In order to overcome at least partially the aforementioned drawbacks, the invention provides a method to control quality of signal in a network micro-cell, comprising the steps :
- the base station receives a measure of the interfering signals in the current deployment position for the used carrier frequency domain,
- the base station determines a quality of signal indicator value taking into account the measured interfering signals in the current deployment position for the used carrier frequency domain,
- the base stations sends the determined quality of signal indicator value to a display interface.

With frequencies in general not lower than 900 MHz, often around 2 GHz, as used in 3G/4G networks, the wavelength is not higher than 30cm, often around 15cm. Consequently, a change in the deployment position of the base station of comparable magnitude, a few 10cm, can lead to a steep decline of the interference, and a corresponding improvement of the signal.

Such displacements are achievable around the primary deployment position, for example on a determined shelf or rack in a user's home. These displacements are easily done, since the user is informed on how the previous displacement acted on the quality of signal.

In addition, the method may have at least one of the following characteristics, in combination or taken separately.

It further comprises the step :
- if the displayed quality of signal indicator value is lower than a predetermined value, the user places the base station in a different deployment position and the precedent steps are repeated.

The different deployment position is in a perimeter of 2cm up to 200cm around the initial deployment position.

The different deployment position is reached by rotating the base station.

It comprises a previous step of scanning the operating frequency range of the base station and selecting the carrier frequency domain with least interfering signal.

The invention also relates to a wireless radio access network micro-cell base station comprising :
- means to receive a measure of the amount of external interfering radio signal in the current deployment position,
- means to determine a quality of signal indicator value using the amount of external interfering radio signals detected by the bandwidth scanner,
- an output destined to be connected to a display interface.

In addition, the wireless radio access network micro-cell base station may have at least one of the following characteristics, in combination or taken separately.

It further comprises a bandwidth scanner connected to the means to receive a measure of the amount of external interfering radio signal in the current deployment position (A), configured to scan the operating frequency range of the base station and measure the external interfering signal amount.

The means to receive a measure of the amount of external interfering radio signal in the current deployment position are connected to a user equipment giving in output network connection quality information.

It further comprises a display interface connected to the output.

The display interface comprises at least one light emitting diode.

The display interface comprises a plurality of light emitting diodes configured to form a staircase indicator.

The display interface comprises a liquid crystal display screen.

The display interface comprises an audio emitter.

The base station comprises an alert signal generator configured to generate an alert when the quality of signal indicator value reaches specific thresholds.

The output is configured to be connected to the screen of a user equipment.

The user equipment is one device among the following list : cellular phone, electronic pad, personal data assistant (PDA), computer, television set.

Further characteristics will appear at the reading of the description of the following figures, given by way of example in a non-limitative purpose, among which :
- Figure 1 schematically illustrates a network micro-cell base station as used in the method,
- Figure 2 represents the different steps of a particular embodiment of the method for improving base station deployment position conditioned quality of signal.

In all figures the same references relate to the same elements.

### DETAILED DESCRIPTION OF THE INVENTION

The invention relates to a wireless radio access network cell.

As used herein, the term micro-cell refers to a network cell related to a micro-cell base station, and extended in a confined space, such as a room, or part of a building. It is used in opposition to macro-cell, term used to designate, in the backhauling network architecture, a group of interconnected micro-cells.

As used herein, the term femto-cell relates to a private micro-cell, that does not belong to a macro-cell.

Femto-cell base stations are most often deployed in homes and are the central element of the "multiple-play" (triple-play and quadruple-play) offers, which comprise services such as internet connection, voice on IP (VoIP) phone calls, television and cellular phone supporting.

Micro and femto-cell base stations that are neighbours may interfere with each other, when using the same carrier frequency band. Such interference leads to errors in the signal reading, which the user perceives as a loss of signal in the cell, or as lowering of the up and download rate. If the carrier frequency bands of two neighbouring base stations overlap each-other, the usable bandwidth is shortened by the overlapping, so that the downlink to a user equipment is reduced.

To prevent as far as possible the interferences, base stations are provided with a wider usable frequency range than the connectivity requires. The base station can pick carrier frequency bandwidth segments within its usable frequency range that are less subject to interferences.

Micro-cell base stations within a macro-cell can interact with each-other to optimize bandwidth allocation. Femto-cell base stations, on the opposite, are independent one from another. Femto-cell base stations belong to different users and may be related to different providers, so that a coordination between them is impossible.

An alternate solution, in particular for femto-cell base stations, is the physical displacement of said base station.

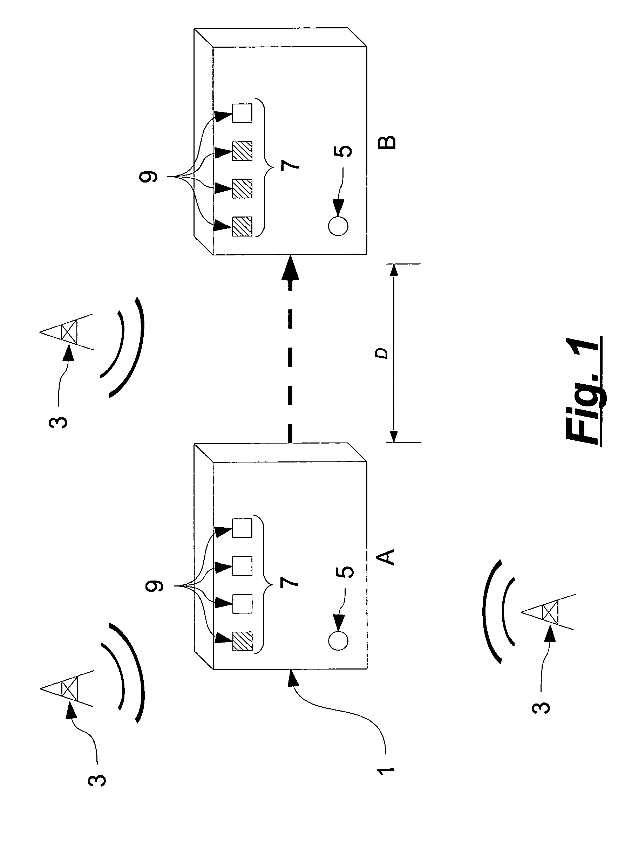

Figure 1 illustrates a method to control the quality of signal in a femto or micro-cell by moving the base station, and the corresponding base station.

In figure 1, the base station 1 is at first in an initial position A, where it is subject to the interfering signal from interfering emitters 3, depicted as antennas. The interfering emitters 3 are for example other, proximal, base stations, or mobile phone network antennas.

For example due to low signal quality, the user decides to perform an optimization. Therefore, he presses a button 5, initiating the optimization process. The button 5 can be a dedicated button, or an already attributed one. In case the button 5 is already attributed, the optimization process can be initiated by a different actuation of said button 5, for example by pressing it twice quickly, or by keeping it pushed for a few seconds.

In the first position A, the base station 1 receives a signal quality measure, for example by performing a scan of its operating frequency range. To do so, the base station 1 switches its own emitters off and measures the interfering signals with a bandwidth scanner, bandwidth segment per bandwidth segment.

Alternatively, the base station 1 can be connected to a user equipment, such as a cellular phone, electronic pad, personal data assistant (PDA), computer, or a television set, comprising means to measure said signal quality regarding the amount of interfering signal.

The base station 1 can interrogate the user equipment when entering the optimization process, or deduce the signal quality on regular basis from user equipment connection feedback signals.

In addition, information about known positions of neighbour emitters 3, potentially interfering, can be used to improve the interference measurement. For example, the position of base stations connected to a common network node evaluated using a positioning system (such as GPS) can be used.

The base station 1 then establishes a quality of signal indicator, for example by comparing the estimated maximum data transfer speed taking into account the interfering signals and the theoretical maximum transfer speed without interfering signals.

The base station 1 comprises an output to a display interface 7. In the example of figure 1, the display interface comprises four light emitting diodes (LED) 9. Those LEDs 9 form a line. The quality of signal is mapped on a 0 to 4 scale, and a corresponding number of the LEDS 9 is lit. The LEDS 9 of the display interface 7 form a staircase indicator.

It is also possible, as an alternative, that only one LED 9 is used. The one LED 9 could, for example, blink at frequencies corresponding to specific value ranges of the quality of signal indicator.

The LEDs 9 used to display the quality of signal can be dedicated ones or already attributed ones, like the usual ones for power on/off, cable connection on/off, radio signal on/off and the like.

Another alternative is the use of an audio emitter, emitting chirps at a frequency corresponding to specific value ranges of the quality of signal indicator.

In addition or as an alternative, the display interface 7 can comprise a liquid crystal display (LCD) screen, mounted on the base station 1.

In addition or as a further alternative, the display interface 7 can comprise a user equipment such as a computer, a cellular phone, an electronic pad, a personal data assistant (PDA) or a television set. The user equipment is connected to the output, for example by Ethernet cable, and displays on its screen the quality of signal indicator value.

In the pictured example, the base station establishes a signal quality indicator of 1. One of the four LEDs 9 is consequently lit. In the present example, the quality of signal indicator value of 1 corresponds to a poor signal quality. In order to optimize said signal quality, the user intervenes and displaces the base station 1.

3GPP and 4G equipments use radio signal about 2 GHz. The corresponding wavelength is about 15 cm. Consequently, a displacement of same amplitude (a few 10cm), typically from 2 to 200cm, can be enough to observe a drastic reduction in the interferences. The user displaces the base station 1 by a distance D of 2 to 200cm, to a different deployment position B. This magnitude D of displacement is still achievable in most deployment cases, where the base station 1 is placed at a specific place. For example, the base station can be on a shelf, or table, chosen to be near the different fixed connections (power and uplink plugs), or for any other practical or even aesthetic reasons.

In addition or as an alternative, the second deployment position B can be reached by rotating to base station 1, if the antenna has a non isotropic radiation pattern.

In the second position B, the base station refreshes the quality of signal indicator, and the new value is displayed on the display interface 7. In the example of figure 1, the second quality of signal value is 3, corresponding to a good signal quality.

By moving the base station 1 from position A to position B, the user has improved the quality of signal in the network micro cell. If no improvement occurs, or the improvement is not sufficient, the user can move the base station to yet another deployment position where the quality of signal indicator will be determined again.

In a particular embodiment, the refreshing of the quality of signal indicator value is continually performed by the base-station 1, while the user slowly moves said base station 1 in a perimeter of 2 to 200 cm around its initial deployment position A.

Once the user has placed the base station in a position B where he estimates the displayed signal quality sufficient, he exits the optimization process by pressing again the button 5.

This method to control the quality of signal in the network cell is also compatible with other, algorithm based optimizing methods.

For example, in the first position A, the base station 1 can perform a scan of its usable frequency range, if it has more than one allowed frequency bandwidth. If a sufficient bandwidth domain is interference free in the usable frequency range, the base station 1 switches to using said free bandwidth domain, and no further step is required.

However, if not enough interference free bandwidth segments can be found, the base station 1 rates the different segments from least to most interference containing. The base station 1 then switches to the best available, this is the one with the least interfering signals.

In addition to the manual on/off commands of the quality of signal optimization mode, the base station 1 may enter automatically said optimization mode whenever the base station 1 has been powered down for a long period (more than twenty-four hours, for example), and/or at first deployment.

Also, the base station 1 can exit automatically the quality of signal optimization mode when the quality of signal indicator does not change value during a predetermined period of time (one minute, for example), or after a predetermined time period in said quality of signal optimization mode (three minutes, for example).

In addition or as an alternative, the base station can send a signal through the display interface, like a short blinking of the LEDs 9, or a beep sound if equipped with an audio emitter, whenever the quality of signal indicator reaches a high value threshold, in the present example 3 or 4. Then, if the quality of signal indicator value remains above said high value threshold for a few seconds (ten, for example), the base station 1 automatically exits the quality of signal optimization mode.

The base station 1 can also send a signal (blinking LEDs 9, beep sound) via the display interface 7 when the quality of signal indicator value remains under a low value threshold for a predetermined amount of time (one minute for example), in the present example, said lower threshold value could be chosen to be 1.

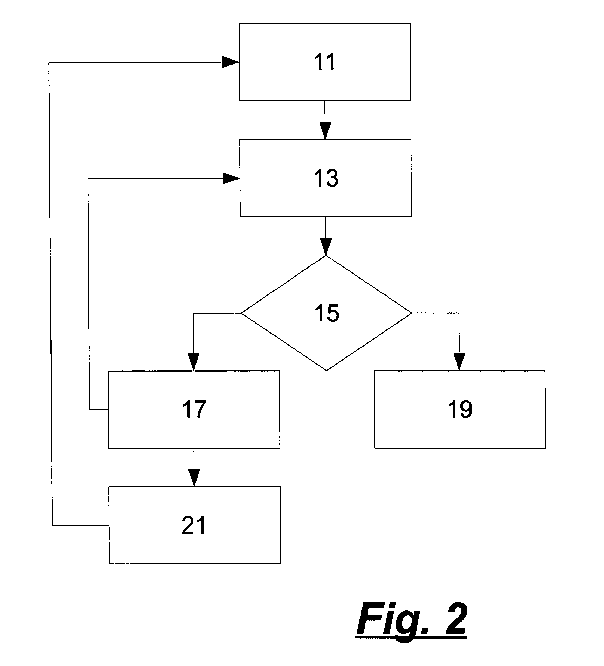

Figure 2 pictures the different steps of the method to control quality of signal in the network micro-cell.

In step 13, the base station 1 determines the quality of signal indicator value for the operating frequency range, at the current deployment position. For example, the base station 1 can divide the operating frequency range in subsegments. It then calculates, with its own emitters powered down, the proportion of subsegments within the domain having an integrated amplitude value higher than a predetermined threshold value.

The quality of signal indicator value is then sent by the base station 1 to the display interface 7, where it is displayed.

Having read the quality of signal indicator value on the display interface, the user decides whether or not the quality of signal is sufficient in step 15, and chooses to continue optimization by moving the base station 1 in a second position B in step 17, or to exit optimization mode in step 19 if the quality of signal has improved enough.

In case the user displaced the base station 1 to a different position B, steps 13 and 15 are repeated, in said different position B.

The steps 13, 15 and 17 form a loop that is repeated until sufficient quality of signal is reached. All different base station deployment positions B used during the repetition of the loop can be taken within a perimeter of 2 to 200cm around the initial deployment position A, which is determined by the user for practical or aesthetic reasons.

In a particular embodiment, where the base station 1 has more than one frequency bandwidth allowed, the base station rates the available bandwidths in a first step 11. Step 11 is performed after entering the quality of signal optimization mode : the base station 1 rates the different available frequency bands in the operating frequency range, at the current deployment position A. To do so, the base station 1 powers down its own emitters and scans the operating frequency range, frequency band by frequency band. The base station then rates them from least to most interference containing. To rate them, the base-station can for example compare the integrated amplitude value of the frequency bands, or count the subsegments of the frequency bandwidths with a mean value higher than a threshold.

The base station 1 then selects the best frequency domain, id est the bandwidth with the least interfering signal in it. If the user has tried various base station 1 deployment positions A, B, in steps 13, 15 and 17 and none permitted a sufficient quality of signal, the user may in an additional step 21 order, for example by pressing a special button or by pressing a button in a special manner, to discard the currently used frequency bandwidth and to return to the previous step 11, to select the next best frequency domain and to pursue the method using said next best frequency bandwidth

The proposed method to control the quality of signal in a network micro or femto-cell and the associated base station 1 offer a new, complementary, degree of freedom for connection optimization from user equipments to base station 1 within the cell. Also, the resulting method is easily performed by untrained users, and does not require the intervention of a technician.

Furthermore, by using essentially already existing functions and apparatus of the base station 1, the improvement of micro and femto-cell base stations requires only minimal raise in production and selling prices. In particular, already implemented LEDs 9 can be used as staircase indicator to form the display interface 7, and already implemented buttons 5 can be used to enter/exit the optimization mode.

## Claims

1. Method to control quality of signal in a network micro-cell, comprising the steps :
- the base station (1) receives a measure of the interfering signals in the current deployment position (A) for the used carrier frequency domain,
- the base station (1) determines a quality of signal indicator value taking into account the measured interfering signals in the current deployment position (A) for the used carrier frequency domain,
- the base stations (1) sends the determined quality of signal indicator value to a display interface (7).

2. Method according to claim 1 wherein it further comprises the step :
- if the displayed quality of signal indicator value is lower than a predetermined value, the user places the base station (1) in a different deployment position (B) and the precedent steps are repeated.

3. Method according to any of the claims 1 or 2, wherein the different deployment position (B) is in perimeter of 2cm up to 200cm around the initial deployment position (A).

4. Method according to any of claims 1 to 3, wherein the different deployment position (B) is reached by rotating the base station (1).

5. Method according to any of the claims 1 to 4, wherein it comprises a previous step of scanning the operating frequency range of the base station and measuring the interfering signal amount.

6. Wireless radio access network micro-cell base station (1) comprising :
- means to receive a measure of the amount of external interfering radio signal in the current deployment position (A),
- means to determine a quality of signal indicator value using the amount of external interfering radio signals,
- an output destined to be connected to a display interface (7).

7. Base station according to claim 6, wherein it further comprises a bandwidth scanner connected to the means to receive a measure of the amount of external interfering radio signal in the current deployment position (A), configured to scan the operating frequency range of the base station and measure the external interfering signal amount.

8. Base station according to claim 6, wherein the means to receive a measure of the amount of external interfering radio signal in the current deployment position (A) are connected to a user equipment giving in output network connection quality information.

9. Base station according to claim 6, 7 or 8, wherein it further comprises a display interface (7) connected to the output.

10. Base station according to claim 9, wherein the display interface (7) comprises at least one light emitting diode (9).

11. Base station according to claim 9 or 10, wherein the display interface (7) comprises a plurality of light emitting diodes (9) configured to form a staircase indicator.

12. Base station according to claim 9, 10 or 11, wherein the display interface (7) comprises a liquid crystal display screen.

13. Base station according to any of claims 9 to 12, wherein the base station (1) comprises an alert signal generator configured to generate an alert when the quality of signal indicator value reaches specific thresholds.

14. Base station according to any of claims 9 to 13, wherein the output is configured to be connected to the screen of a user equipment.

15. Base station according to claim 8 or 14, wherein the user equipment is one device among the following list : cellular phone, electronic pad, personal data assistant (PDA), computer, television set.
